# EUROPEAN PATENT SPECIFICATION

(11) **EP 2 768 885 B1**
(45) Date of publication and mention of the grant of the patent: **23.05.2018**
(21) Application number: 12784751.5
(22) Date of filing: 11.10.2012
(51) Int. Cl.: C08G 77/18, C08L 83/04, C08K 5/549, C08K 5/544, C08K 5/5419

(54) **MULTI-COMPONENT ROOM-TEMPERATURE-CURABLE SILICONE ELASTOMER COMPOSITION**
BEI RAUMTEMPERATUR HÄRTBARE SILIKONELASTOMERZUSAMMENSETZUNG AUS MEHREREN KOMPONENTEN
COMPOSITION ÉLASTOMÈRE DE SILICONE DURCISSABLE À LA TEMPÉRATURE AMBIANTE, MULTI-CONSTITUANTS

(30) Priority: 20.10.2011 JP 2011230691
(43) Date of publication of application: 27.08.2014
(73) Proprietor: Dow Corning Toray Co., Ltd., Tokyo 100-0004 (JP)
(72) Inventor: OTA, Kenji, Chiba, 2990108 (JP); ADACHI, Hiroshi, Chiba, 2990108 (JP)
(74) Representative: Donlan, Andrew Michael
(86) International application number: PCT/JP2012/076877
(87) International publication number: WO 2013/058293

(56) References cited:
- EP-A2- 0 304 958
- EP-B1- 1 943 304
- JP-A- 2002 053 753
- JP-A- 2003 221 506

## Description

### Technical Field

The present invention relates to a multi-component room-temperature-curable silicone elastomer composition.

### Background Art

It is known that some specific multi-component room-temperature-curable silicone elastomer compositions in the form of two separately stored compositions or the like, the properties of which are not affected by atmospheric moisture, are widely used as sealing materials that possess excellent deep curability and allow substantially uniform curing throughout the entire body of the sealing material, i.e., from the surface to the inner part. For example, Japanese Unexamined Patent Application Publication (hereinafter referred to as "Kokai") S48-37452 proposes a two-package-type liquid room-temperature-curable silicone rubber composition comprising the following: a base composition composed of a filler and a diorganopolysiloxane capped at molecular terminals with silanol groups; and a curing agent composition consisting of an alkyl silicate, an amino-functional silane, and a curing catalyst.

Additionally, Kokai 2002-053753 and Kokai 2002-121385 propose a composition in which a silane compound having phenyl groups as a crosslinking agent is used in a two-package-type liquid room-temperature-curable silicone rubber composition such as that described above in order to enhance adhesion with an organic resin and to enhance adhesion when exposed to hot water vapor.

However, the aforementioned multi-component room-temperature-curable silicone rubber compositions are characterized by a slow curing rate and curability insufficient for use in industrial applications such as the manufacture of multiple-pane glass units and the like. Therefore, Kokai 2007-119768 proposes a multi-component room-temperature-curable silicone rubber composition comprising at least a diorganopolysiloxane that consists of a diorganopolysiloxane capped at both molecular terminals with alkoxysilyl groups or hydroxysilyl groups, and a diorganopolysiloxane capped at one molecular terminal with an alkoxysilyl group or a hydroxysilyl group and capped at the other molecular terminal with an alkyl group or an alkenyl group (A); a methoxy group-containing silicon-containing compound containing a bis(methoxysilyl)alkane or an organotrimethoxysilane, a methoxy group-containing carbasilatrane derivative, and an aminoalkylmethoxysilane (B); and a curing catalyst (C), as a multi-component room-temperature-curable silicone rubber composition, formed from a plurality of separately stored compositions, having both long-term adhesion moisture resistance and rapid curability.

Kokai S64-60656 and Kokai 2003-221506 propose a composition comprising 1,2-bis(trimethoxysilyl)ethane, 1,6-bis(trimethoxysilyl)hexane, or a similar disilaalkane compound as a crosslinking agent; and a carbasilatrane compound as an adhesion promoter for the purpose of preventing a reduction in adhesive strength after immersion in hot water.

Furthermore, Kokai H10-087993 and Kokai 2005-247923 propose a composition comprising 1,3,5-tris(trialkoxysilylalkyl)isocyanurate or a similar isocyanurate compound as a crosslinking agent for the purposes of improving rheology properties and imparting storage stability.

### Prior Art Documents

### Patent Documents

Patent Document 1: Japanese Unexamined Patent Application Publication No. S-48-37452A
Patent Document 2: Japanese Unexamined Patent Application Publication No. 2002-053753A
Patent Document 3: Japanese Unexamined Patent Application Publication No. 2002-121385A
Patent Document 4: Japanese Unexamined Patent Application Publication No. 2007-119768A
Patent Document 5: Japanese Unexamined Patent Application Publication No. S-64-60656A
Patent Document 6: Japanese Unexamined Patent Application Publication No. 2003-221506A
Patent Document 7: Japanese Unexamined Patent Application Publication No. H-10-087993A
Patent Document 8: Japanese Unexamined Patent Application Publication No. 2005-247923A

### SUMMARY OF INVENTION

However, these room-temperature-curable silicone elastomer compositions have a problem in that dependence of the curing properties on temperature is great. Particularly, when used under low-temperature conditions such as on-site fabrication during the winter, curing time is excessively long. Additionally, there is a problem in that handling/workability declines when the curing catalyst content is increased because usable life in high-temperature conditions becomes excessively short and, as a result, further compounding of a curing retarding agent becomes necessary.

The present invention was developed in order to solve the problems described above. An object of the present invention is to provide a multi-component room-temperature-curable silicone elastomer composition having sufficient usable life, curing properties with low dependence on temperature and excellent curability at low temperatures, and excellent adhesion.

As a result of intensive investigation aimed at achieving the above object, the inventors arrived at the present invention. Specifically, the objects of the present invention are achieved by:A multi-component room-temperature-curable silicone elastomer composition comprising:
(A) 100 parts by weight of a diorganopolysiloxane capped at the molecular terminals by alkoxysilyl groups or hydroxysilyl groups, having a viscosity at 25°C of 20 to 1,000,000 mPa•s measured using a V-type rotational viscometer;
(B) from 0.1 to 20 parts by weight of a silicon-bonded aryl group-containing alkoxysilane;
(C) from 0.1 to 10 parts by weight of an organic compound having at least two alkoxysilyl groups in one molecule, and being free of siloxane bonds (however, a weight ratio of the component (B) to the component (C) is from 95:5 to 30:70);
(D) from 0.001 to 0.2 parts by weight of a curing catalyst;
   and less than 0.02 part by weight of (F) an aminoalkylmethoxysilane per 100 parts by weight of the component (A), or free of aminoalkylmethoxysilane (F);
   wherein the multi-component room-temperature-curable silicone elastomer composition is a two-component room-temperature-curable silicone elastomer composition comprising:
   (I) a composition including the component (A), but not the component (B), not the component (C), and not the component (D); and
   (II) a composition including the component (B), the component (C), and the component (D), but not the component (A).

The component (B) is preferably a phenyltrialkoxysilane.

The alkoxy groups of the component (B) are preferably methoxy groups.

The component (C) is preferably selected from the group consisting of (C-1) a reaction product of an epoxy group-containing alkoxysilane and an amino group-containing alkoxysilane, (C-2) an alkoxysilyl group-containing isocyanurate, and (C-3) a bis(alkoxysilyl)alkane.

The alkoxy groups of the component (C) are preferably methoxy groups.

The multi-component room-temperature-curable silicone elastomer composition of the present invention can further comprise 10 to 200 parts by mass of (E) a fine powder of calcium carbonate per 100 parts by weight of the component (A).

The multi-component room-temperature-curable silicone elastomer composition of the present invention can further comprise less than 0.02 parts by weight of an aminoalkylmethoxysilane per 100 parts by weight of the component (A).

The multi-component room-temperature-curable silicone elastomer composition of the present invention preferably is free of aminoalkylmethoxysilanes.

The multi-component room-temperature-curable silicone elastomer composition of the present invention is preferably a two-component room-temperature-curable silicone elastomer composition comprising: (I) a composition including the component (A), but not the component (B), the component (C), and the component (D); and (II) a composition including the component (B), the component (C), and the component (D), but not the component (A).

Additionally, the multi-component room-temperature-curable silicone elastomer composition of the present invention is preferably a two-component room-temperature-curable silicone elastomer composition comprising: (I) a composition including the component (A) and the component (E), but not the component (B), the component (C), and the component (D); and (II) a composition including the component (B), the component (C), and the component (D), but not the component (A) and the component (E).

Additionally, a crosslinking agent composition of the present invention is preferably a crosslinking agent composition for a two-component room-temperature-curable silicone elastomer composition, the crosslinking agent composition comprising: 100 parts by weight of the silicon-bonded aryl group-containing alkoxysilane (B);
the organic compound having at least two alkoxysilyl groups in one molecule, and being free of siloxane bonds (C) (at an amount where a weight ratio of the component (B) to the component (C) is from 95:5 to 30:70); and
from 0.005 to 20 parts by weight of the curing catalyst (D).

According to the present invention, a room-temperature-curable silicone elastomer composition can be provided that has excellent deep curability and, furthermore that has sufficient usable life, and curing properties with low dependence on temperature due to being a multi-component composition.

Thus, the multi-component room-temperature-curable silicone elastomer composition of the present invention has sufficient usable life at low temperatures, and can display excellent curability and adhesion while suppressing the curing time from becoming excessively long.

### DESCRIPTION OF EMBODIMENTS

A multi-component room-temperature-curable silicone elastomer composition of the present invention comprises at least:
(A) 100 parts by weight of a diorganopolysiloxane capped at the molecular terminals by alkoxysilyl groups or hydroxysilyl groups, having a viscosity at 25°C of 20 to 1,000,000 mPa•s measured using a V-type rotational viscometer;
(B) from 0.1 to 20 parts by weight of a silicon-bonded aryl group-containing alkoxysilane;
(C) from 0.1 to 10 parts by weight of an organic compound having at least two alkoxysilyl groups in one molecule, and being free of siloxane bonds (however, a weight ratio of the component (B) to the component (C) is from 95:5 to 30:70);
(D) from 0.001 to 0.2 parts by weight of a curing catalyst;
   and less than 0.02 part by weight of (F) an aminoalkylmethoxysilane per 100 parts by weight of the component (A), or free of aminoalkylmethoxysilane (F);
   wherein the multi-component room-temperature-curable silicone elastomer composition is a two-component room-temperature-curable silicone elastomer composition comprising:
   (I) a composition including the component (A), but not the component (B), not the component (C), and not the component (D); and
   (II) a composition including the component (B), the component (C), and the component (D), but not the component (A).

The component (A) is a main component of the multi-component room-temperature-curable silicone elastomer composition. As necessary, the component (A) may be a mixed diorganopolysiloxane including (A-1) a diorganopolysiloxane capped at both molecular terminals with alkoxysilyl groups or hydroxysilyl groups and (A-2) a diorganopolysiloxane capped at both molecular terminals with alkyl groups or alkenyl groups.

In the component (A), if the content of the component (A-2) is excessive, strength of the cured silicone elastomer will tend to decline and adhesion with a substrate will tend to decline. Therefore, a mixture ratio (expressed as a weight ratio) of the component (A-1) to the component (A-2) is preferably such that (A-1):(A-2)=100:0 to 20:80, more preferably such that (A-1):(A-2)=100:0 to 60:40, even more preferably such that (A-1):(A-2)=95:5 to 70:30, and most preferably such that (A-1):(A-2)=95:5 to 80:20.

Furthermore, if the viscosity of the component (A) is too low, the strength of the cured silicone elastomer will decline and, on the other hand, if the viscosity is excessive, workability of the composition when manufacturing or using will decline. Therefore, the viscosity at 25°C of the component (A) is preferably in a range of 20 to 1,000,000 mPa•s, and more preferably in a range of 100 to 200,000 mPa•s. Note that when the component (A) is a mixture of the component (A-1) and the component (A-2), the viscosity described above is the viscosity of the mixture.

Preferably component (A-1) is a diorganopolysiloxane expressed by the following general formula: 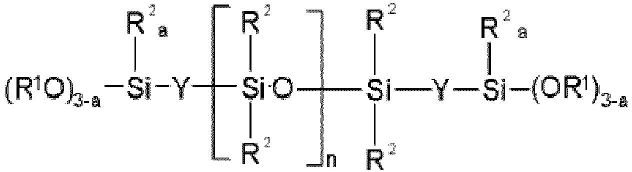 In this formula, R¹ represents a hydrogen atom or a group selected from a methyl, ethyl, propyl, butyl, octyl, or a similar alkyl group having from 1 to 10 carbons; and a methoxymethyl, methoxyethyl, ethoxymethyl, ethoxyethoxy, or a similar alkoxyalkyl group. Among these, a hydrogen atom, a methyl group, and an ethyl group are preferable. R² represents a group selected from a monovalent hydrocarbon group, a halogenated hydrocarbon group, and a cyanoalkyl group. Specific examples of the R² moiety include a methyl, ethyl, propyl, butyl, octyl, or similar alkyl group having from 1 to 10 carbons; a cyclopentyl, cyclohexyl, or similar cycloalkyl group; a vinyl, allyl, or similar alkenyl group; a phenyl, tolyl, naphthyl, or similar aryl group; a benzyl, phenylethyl, phenylpropyl, or similar aralkyl group; a trifluoropropyl, chloropropyl, or similar halogenated hydrocarbon group; and a β-cyanoethyl, γ-cyanopropyl, or a similar cyanoalkyl group. Among these, a methyl group is preferable. When R¹ is an alkyl group or an alkoxyalkyl group, "a" is 0, 1, or 2; and when R¹ is a hydrogen atom, "a" is 2.

In the above formula, Y represents an oxygen atom, a divalent hydrocarbon group, or a group expressed by the following general formula: 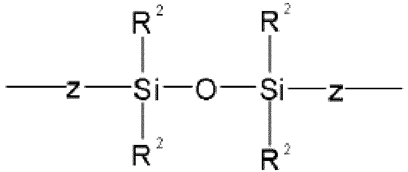 In this formula, the R² moiety is the same as defined above, and Z is a divalent hydrocarbon group. The divalent hydrocarbon group is preferably a methylene, ethylene, propylene, butylene, hexene, or similar alkylene group having from 1 to 10 carbons. "n" is a number that provides viscosity at 25°C in the range of 20 to 1,000,000 mPa•s.

The component (A-1) can be manufactured via a known method such as, for example, that described in Japanese Examined Patent Application Publication No. H03-4566 or Kokai S63-270762.

In the composition of the present invention, component (A-2) functions to reduce the modulus of elasticity of a silicone elastomer (cured product of the composition of the present invention), improve adhesion to hard-to-adhere substrates, or the like. The component (A-2) is preferably a diorganopolysiloxane expressed by the following general formula: 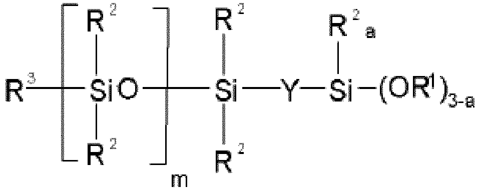 In this formula, the R¹, R², Y, and "a" moieties are the same as defined above. R³represents a methyl, ethyl, propyl, butyl, octyl, or similar alkyl group having from 1 to 10 carbons; or a vinyl, allyl, or similar alkenyl group. Among these, an alkyl group having from 1 to 10 carbons is preferable, and a methyl group is more preferable. "m" is a number that provides viscosity at 25°C in the range of 20 to 1,000,000 mPa•s.

The component (A-2) can be manufactured via a known method such as, for example, that described in Kokai H04-13767 or Kokai S63-270762.

The component (B) is a silicon-bonded aryl group-containing alkoxysilane and, by combining it with the below-described component (C), reacts with the component (A) in order to crosslink/cure the composition of the present invention; and, at the same time, functions to maintain sufficient usable life at high temperatures and impart a sufficient curing rate at low temperatures, that is, the component (B) functions to reduce the dependence of the curing properties on temperature of the composition of the present invention.

The silicon-bonded aryl group-containing alkoxysilane component (B) is not limited, provided that it has at least one silicon-bonded aryl group and at least one alkoxy group. A single type of silicon-bonded aryl group-containing alkoxysilane may be used alone as the silicon-bonded aryl group-containing alkoxysilane component (B) or, as necessary, a combination of two or more types of silicon-bonded aryl group-containing alkoxysilanes may be used.

Examples of the aryl groups in the component (B) include phenyl groups, tolyl groups, xylyl groups, naphthyl groups, and the like.

Examples of the alkoxy groups in the component (B) include methoxy groups, ethoxy groups, isopropoxy groups, butoxy groups, and the like. Of these, methoxy groups are preferable.

Examples of the silicon-bonded aryl group-containing alkoxysilane in the component (B) include phenyltrialkoxysilane, diphenyldialkoxysilane, 4-hydroxyphenyltrialkoxysilane, and the like. Of these, phenyltrialkoxysilane is preferable. Examples of the phenyltrialkoxysilane include phenyltrimethoxysilane, phenyltriethoxysilane, and the like.

A compounded amount of the component (B) is from 0.1 to 20 parts by weight and preferably from 0.5 to 5 parts by weight per 100 parts by weight of the component (A). If the compounded amount of the component (B) is less than the lower limit of the range described above, curability at low temperatures will decline, and if the compounded amount of the component (B) exceeds the upper limit of the range described above, adhesion will decline.

The component (C) is an organic compound having at least two alkoxysilyl groups in one molecule, and being free of siloxane bonds, and, along with the component (B), the component (C) functions to reduce the dependence of the curing properties on temperature of the composition of the present invention and, at the same time, impart adhesion to the composition of the present invention.

Examples of the alkoxysilyl groups in the component (C) include trialkoxysilyl groups, organodialkoxysilyl groups, and diorganoalkoxysilyl groups. Of these, trialkoxysilyl groups are preferable. From the perspective of adhesion, there must be at least two or more of the alkoxysilyl groups in one molecule.

Examples of the alkoxy groups in the component (C) include methoxy groups, ethoxy groups, isopropoxy groups, butoxy groups, and the like. Of these, methoxy groups are preferable.

Examples of silicon-bonded organic groups other than alkoxy groups include methyl groups, ethyl groups, propyl groups, butyl groups, octyl groups, and similar alkyl groups; phenyl groups, tolyl groups, xylyl groups, naphthyl groups, and similar aryl groups; vinyl groups, allyl groups, and similar alkenyl groups; benzyl groups, phenylethyl groups, phenylpropyl groups, and similar aralkyl groups; and the like.

The compound of the component (C) is free of siloxane bonds. A reason for this is because, if siloxane bonds are present, the siloxane bonds may debond due to the action of the curing catalyst in cases where a curing catalyst is compounded as a crosslinking agent composition and the resulting composition is stored.

From the perspectives of handling/workability of the component (C) and compatibility with the component (A), the bonds between the alkoxysilyl groups in the component (C) preferably have from 1 to 30 carbons. A silicon atom, nitrogen atom, oxygen atom, sulfur atom, or similar heteroatom may be included in the bonds between the alkoxysilyl groups in the component (C).

From the perspectives of handling/workability of the component (C) and compatibility with the component (A), kinetic viscosity at 25°C of the component (C) is preferably not less than 0.1 mm²/s; and the viscosity at 25°C is preferably not more than 2,000 mPa•s and more preferably not more than 1,000 mPa•s. The kinetic viscosity can be measured using a Ubbelohde viscometer and the viscosity can be measured using a rotational viscometer.

A manufacturing method of the component (C) is not particularly limited, and examples thereof include a method in which epoxy groups of an epoxy group-containing alkoxysilane and amino groups of an amino group-containing alkoxysilane are reacted; a method in which any one of a cyanate, an ammonium salt of an organic acid, or an alkali metal salt of an organic acid is reacted with a haloalkylalkoxysilane; and a method in which a compound having two or more unsaturated carbon bonds and preferably a hydrocarbon having two or more unsaturated carbon bonds with 4 to 30 carbons, and an organodialkoxysilane or a trialkoxysilane are subjected to a hydrosilylation reaction.

Specific examples of the component (C), that is, (C-1) the reaction product of an epoxy group-containing alkoxysilane and an amino group-containing alkoxysilane, (C-2) the alkoxysilyl group-containing isocyanurate, and (C-3) the bis(alkoxysilyl)alkane are described below.

The reaction product of an epoxy group-containing alkoxysilane and an amino group-containing alkoxysilane (C-1) can be manufactured by, for example, uniformly blending and reacting, per 1 mole of an amino group-containing alkoxysilane expressed by the following general formula: 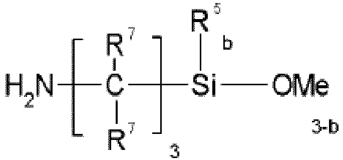 (wherein, OMe is a methoxy group; R⁵ is a methyl group, ethyl group, propyl group, butyl group, octyl group, or other alkyl group having from 1 to 10 carbons or a methoxy group; the R⁷ moieties are identical or different hydrogen atoms, or methyl groups, ethyl groups, propyl groups, butyl groups, octyl groups, or similar alkyl groups having from 1 to 10 carbons; "b" is 0 or 1, and preferably 0); from 0.5 to 3.0 moles, preferably 0.8 to 2.5 moles, and more preferably from 1 to 2 moles of an epoxy compound expressed by the following general formula: 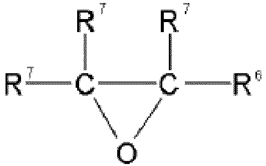 (wherein the R⁶ moieties are identical or different groups expressed by the following general formula:

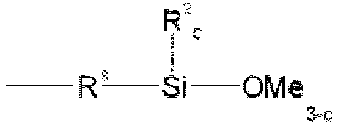

-R⁴-OMe

wherein R⁴ is a substituted or unsubstituted alkylene group having from 2 to 10 carbons, and is preferably a substituted or unsubstituted alkylene group having from 5 to 10 carbons; specific examples thereof being: butylene, pentylene, hexylene, heptylene, octylene, nonylene, decylene, or similar alkylene groups; or any of the aforementioned groups where the hydrogen atom is substituted with a methyl, ethyl, propyl, butyl, cyclopentyl, cyclohexyl, vinyl, allyl, 3,3,3-trifluoropropyl, or 3-chloropropyl group; among these, linear-chain unsubstituted alkylene groups with 5 to 10 carbons are preferable; R⁸ is a substituted or unsubstituted alkylene group having from 2 to 10 carbons, and preferably is a substituted or unsubstituted alkylene group having from 5 to 7 carbons; or a methoxymethyl, methoxyethyl, ethoxymethyl, ethoxyethoxy, or similar alkyleneoxyalkylene group; the OMe, R², and R⁷moieties are the same as defined above; and "c" is 0, 1, or 2). The reaction between the above compounds may be carried out with uniform mixing at room temperature or, if necessary, with heating.

The component (C-2) is an alkoxysilyl group-containing isocyanurate, and examples thereof include 1,3,5-tris(trimethoxysilylpropyl)isocyanurate, 1,3,5-tris(methyldimethoxysilylpropyl)isocyanurate, 1,3,5-tris(dimethylethoxysilylbutyl)isocyanurate, 1,3,5-tris(phenylmethylmethoxysilylpropyl)isocyanurate, and the like.

A commercially available product may be used for the component (C-2). Alternatively, the component (C-2) can be manufactured via, for example, a method described in Kokai H10-087993 or Kokai H11-152289.

The component (C-3) is preferably a compound expressed by the following general formula: 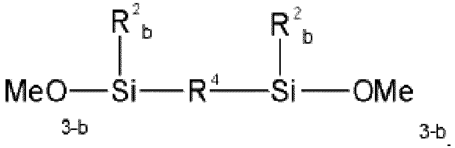 In this formula, the OMe, R², R⁴, and "b" moieties are the same as defined above.

Specific examples of bis(methoxysilyl)alkane include: 1,4-bis(trimethoxysilyl) butane, 1-methyldimethoxysilyl-4-trimethoxysilyl butane, 1,4-bis(methyldimethoxysilyl) butane, 1,5-bis(trimethoxysilyl) pentane, 1,4-bis(trimethoxysilyl) pentane, 1-methyldimethoxysilyl-5-trimethoxysilyl pentane, 1,5-bis(methyldimethoxysilyl) pentane, 1,6-bis(trimethoxysilyl) hexane, 1,4-bis(trimethoxysilyl) hexane, 1,5-bis(trimethoxysilyl) hexane, 2,5-bis(trimethoxysilyl) hexane, 1,6-bis(methyldimethoxysilyl) hexane, 1,7-bis(trimethoxysilyl) heptane, 2,5-bis(trimethoxysilyl) heptane, 2,6-bis(trimethoxysilyl) heptane, 1,8-bis(trimethoxysilyl) octane, 2,5-bis(trimethoxysilyl) octane, 2,7-bis(trimethoxysilyl) octane, 1,9-bis(trimethoxysilyl) nonane, 2,7-bis(trimethoxysilyl) nonane, 1,10-bis(trimethoxysilyl) decane, and 3,8-bis(trimethoxysilyl) decane. A single type of bis(methoxysilyl)alkane may be used alone or a combination of two or more types may be used. Among these, 1,6-bis(trimethoxysilyl) hexane, 1,7-bis(trimethoxysilyl) heptane, 1,8-bis(trimethoxysilyl) octane, 1,9-bis(trimethoxysilyl) nonane, and 1,10-bis(trimethoxysilyl) decane are preferable; and 1,6-bis(trimethoxysilyl) hexane is especially preferable. This is because this compound has low volatility; does not affect curability and adhesion of the multi-component room-temperature-curable silicone elastomer composition of the present invention when the components of the composition of the present invention are mixed and subjected to defoaming; and because it improves workability and performance characteristics of the composition of the present invention.

The bis(methoxysilyl)alkane can be manufactured via a known method, i.e., by hydrosilylation reacting a diene and a trimethoxysilane or an organodimethoxysilane.

A compounded amount of the component (C) is from 0.1 to 10 parts by weight and preferably from 0.1 to 5 parts by weight per 100 parts by weight of the component (A). If the compounded amount of the component (C) is less than the lower limit of the range described above, adhesion will decline, and if the compounded amount of the component (C) exceeds the upper limit of the range described above, curability at low temperatures will decline.

A ratio of the component (B) to the component (C) in terms of weight ratio is from 95:5 to 30:70. If the ratio of the component (B) is less than the lower limit of the range described above, curability of the composition of the present invention at low temperatures will decline, and if the ratio of the component (B) exceeds the upper limit of the range described above, adhesion will decline.

Examples of the curing catalyst (D) include an organic salt of a metal such as tin, titanium, zirconium, iron, antimony, bismuth, manganese, or the like; an organic titanate ester, and an organic titanium chelate compound. Specific examples of the curing catalyst described above include: dimethyl tin dilaurate, dimethyl tin dioctoate, dimethyl tin dineodecanoate, dibutyl tin dilaurate, dibutyl tin dioctoate, dibutyl tin dineodecanoate, or a similar dialkyl tin dicarboxylic acid; stannous octoate, or a similar organic tin compound; and tetrabutyl titanate, tetraisopropyl titanate, diisopropoxy bis(acetyl acetone) titanium, diisopropoxy bis(ethylacetoacetate) titanium, and similar organic titanium compounds. Among these, from the perspectives of obtaining excellent curing properties such as rapid curing and deep curing of the composition of the present invention, organic tin compounds are preferable and dialkyl tin dicarboxylic acid is particularly preferable. A compounded amount of the curing catalyst (D) is from 0.001 to 0.2 parts by weight and preferably from 0.008 to 0.1 parts by weight per 100 parts by weight of the component (A).

The composition of the present invention preferably further comprises (E) a fine powder of calcium carbonate in addition to components (A) to (D) described above for the purpose of further improving the deep curability of the composition of the present invention and enhancing the mechanical strength of a cured product of the composition of the present invention. Examples of the component (E) include a heavy (or dry-ground) fine powder of calcium carbonate, a light (or precipitated) fine powder of calcium carbonate, and the aforementioned fine powders of calcium carbonate that are surface treated with fatty acids, resin acids, or similar organic acids. Among these, the light (or precipitated) fine powder of calcium carbonate is preferable, and the light (or precipitated) fine powder of calcium carbonate that is surface-treated with fatty acids, resin acids, or similar organic acids is particularly preferable. A BET specific surface area of the component (E) is preferably from 5 to 50 m²/g, and more preferably from 10 to 50 m²/g.

A compounded amount of the component (E) is preferably in a range of 10 to 200 parts by weight and more preferably in a range of 30 to 150 parts by weight per 100 parts by weight of the component (A). If the compounded amount of the component (E) is less than the lower limit of the range described above, the desired properties will tend not to improve and, if the compounded amount of the component (E) exceeds the upper limit of the range described above, the handling/workability of the composition of the present invention will tend to be impaired.

In addition to the components (A) to (E) described above, the composition of the present invention may also comprise (F) an aminoalkylmethoxysilane. Examples of the aminoalkylmethoxysilane include γ-aminopropyl methyldimethoxysilane and similar aminoalkyl organodimethoxysilanes; γ-aminopropyl trimethoxysilane and similar aminoalkyl trimethoxysilanes; N-(3-aminoethyl)aminopropyl methyldimethoxysilane and similar N-(β-aminoalkyl)aminoalkyl organodimethoxysilanes; N-(β-aminoethyl)aminopropyl trimethoxysilane and similar N-(β-aminoalkyl)aminoalkyl trimethoxysilanes; and the like.

A compounded amount of the component (F) is preferably not more than 0.10 parts by weight and more preferably less than 0.02 parts by weight per 100 parts by weight of the component (A). Moreover, even more preferably, the composition of the present invention is free of the component (F). If the compounded amount of the component (F) is within the range described above, the curing rate and the usable life can be easily adjusted.

If necessary, in addition to the components (A) to (D), or the components (A) to (E), various additives known to be compoundable in room-temperature-curable silicone elastomer compositions may be added to the composition of the present invention, provided that such compounding is not detrimental to the achieving of the objects of the present invention. Examples of such additives include fumed silica, precipitated silica, fine quartz powder, titanium dioxide powder, diatomaceous earth powder, aluminum hydroxide powder, fine alumina powder, magnesia powder, zinc oxide powder, and the aforementioned products that are surface coated with silanes, silazanes, low-degree-polymerization polysiloxanes, or other finely powdered inorganic fillers. A compounded amount of such an inorganic filler is typically from 10 to 200 parts by weight and preferably from 30 to 150 parts by weight per 100 parts by weight of the component (A). Additionally, examples of the component used to reduce the modulus of elasticity of the cured silicone elastomer include dimethylpolysiloxane capped at both molecular terminals with trimethylsiloxy groups, similar diorganopolysiloxanes capped at both molecular terminals with triorganosiloxy groups, mineral oils, paraffin-based hydrocarbon oils, and naphthene-based hydrocarbon oils. A compounded amount of such a component is typically from 10 to 200 parts by weight and preferably from 30 to 150 parts by weight per 100 parts by weight of the component (A). Additionally, examples of other additives include platinum compounds, zinc carbonate powders, and other flame retardants, plasticizers, thixotropy imparters, mildew-proofing agents, pigments, organic solvents, and the like.

The multi-component room-temperature-curable silicone elastomer composition of the present invention includes a plurality of separately stored compositions, and of said plurality of compositions, the component (A), the component (B), the component (C), and the component (D) are not included simultaneously. The multi-component room-temperature-curable silicone elastomer composition including the plurality of separately stored compositions is configured as a kit. Thereby, manufacturing of a room-temperature-curable silicone elastomer composition having excellent deep curability and rapid curing can be facilitated and the storage stability of said composition can be dramatically enhanced. Moreover, it is required that each of the separately stored compositions not simultaneously include the component (A), the component (B), the component (C), and the component (D). A reason for this is because if the component (A), the component (B), the component (C), and the component (D) are present in a single composition, crosslinking will spontaneously begin and the storage stability of that composition will be lost.

A specific example of the composition of the present invention is a two-component room-temperature-curable silicone elastomer composition comprising: (I) a silicone elastomer base composition including the component (A), and not the component (B), the component (C) and the component (D); and (II) a crosslinking agent composition including the component (B), the component (C), and the component (D), but not the component (A).

Another example is a two-component room-temperature-curable silicone elastomer composition comprising: (I) a silicone elastomer base composition including the component (A) and the component (E) but not the component (B), the component (C), and the component (D); and (II) a crosslinking agent composition including the component (B), the component (C), and the component (D), but not the component (A) and the component (E).

Yet another example is a two-component room-temperature-curable silicone elastomer composition comprising: (I) a composition including the component (A) and the component (E), and not the component (B), the component (C), the component (D), and the component (F); and (II) a composition including the component (B), the component (C), the component (D), and the component (F), but not the component (A) and the component (E).

The crosslinking agent composition for the multi-component room-temperature-curable silicone elastomer composition of the present invention is preferably the crosslinking agent composition including the component (B), the component (C), and the component (D), but not the component (A) and the component (E). In the crosslinking agent composition, the component (C) is preferably compounded in an amount such that a weight ratio of the component (B) to the component (C) is from 95:5 to 30:70; and a compounded amount of the component (D) is preferably from 0.005 to 20 parts by weight per 100 parts by weight of the component (B).

Prior to use, the plurality of separately stored compositions of the multi-component room-temperature-curable silicone elastomer composition of the present invention are mixed. Examples of the mixing method include feeding the various components of the multi-component room-temperature-curable silicone elastomer composition from their respective storage containers into a static mixer by means of a dosing pump, and mixing the components. When mixing the components of the multi-component room-temperature-curable silicone elastomer composition in an open-type mixer prior to use, the composition is preferably defoamed prior to use.

The multi-component room-temperature-curable silicone elastomer composition of the present invention demonstrates excellent adhesion to substrates made from glass, porcelain, mortar, concrete, wood, aluminum, copper, stainless steel, iron, galvanized steel, tin plate, brass, zinc, epoxy resin, phenol resin, and the like. The composition can also demonstrate good adhesion to substrates made from polycarbonate resin, polyester resin, ABS resin, nylon resin, polyvinyl chloride, or from other thermoplastic resins. In the case that these substrate surfaces are coated with thin metal films and the like, in order to reflect heat, these substrate surfaces will be a type that is hard-to-adhere; however, substrate surfaces with good adhesion can be obtained by configuring a ratio of the component (A-1) to the component (A-2) in the component (A) to be in a range of (A-1):(A-2)=95:5 to 70:30. Further improvement in adhesion can be achieved by coating the surface of the substrate with an appropriate primer and then applying the multi-component room-temperature-curable silicone elastomer composition of the present invention to said primer-coated surface.

### EXAMPLES

Hereinafter, examples will be used to describe the present invention in more detail. In the examples, the content of the components referred to as "parts" means "parts by weight." Adhesion durability against water and curability of the multi-component room-temperature-curable silicone elastomer composition were evaluated by the methods described below. Note that the present invention is not limited to these examples.

### Preparation of silicone elastomer base composition

Silicone elastomer base compositions were prepared by uniformly mixing the raw materials at the compounding ratios shown in Table 1. The curability and usable life of the prepared silicone elastomer base compositions were evaluated after being allowed to sit at rest for 24 hours in curability and usable life evaluation temperature atmospheres.

### Method for measuring viscosity

The viscosity of the dimethylpolysiloxane capped at both molecular terminals with hydroxyl groups is a viscosity at 25°C measured using a V-type rotational viscometer. The kinetic viscosity of the dimethylpolysiloxane capped at both molecular terminals with trimethylsilyl groups is a kinetic viscosity at 25°C measured using an Ubbelohde viscometer.

### Preparation of carbasilatrane A

A 1-liter flask equipped with a refluxing cooler was loaded with 179 g (1.0 mole) of 3-aminopropyl trimethoxysilane, 472 g (2.0 moles) of 3-glycidoxypropyl trimethoxysilane, and 64 g (2.0 moles) of methanol. The components were gradually heated under stirring conditions, and a reaction was caused at the reflux temperature of methanol for 36 hours. The reaction product was cooled to room temperature. The²⁹Si NMR spectral analysis of the product obtained after removal of methanol confirmed that the product comprised a carbasilatrane derivative expressed by the formula given below that showed peaks originating from the respective stereoisomers at -62.5 ppm, -63.8 ppm, and -64.9 ppm. The content of the carbasilatrane derivative was 86 wt.%. This reaction product is referred to as carbasilatrane A. The viscosity of this reaction product was 100 mPa•s.

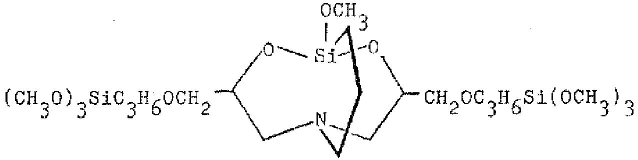

### Preparation of crosslinking agent composition

Crosslinking agent compositions were prepared by uniformly mixing the raw materials at the compounding ratios shown in Table 1. The curability and usable life of the prepared crosslinking agent compositions were evaluated after being allowed to sit at rest for 24 hours in curability and usable life evaluation temperature atmospheres. Note that the viscosity of the 1,3,5-tris(trimethoxysilylpropyl)isocyanurate was 200 mm²/s, the viscosity of the 1,6-bis(trimethoxysilyl)hexane was 3 mm²/s, and each was measured at 25°C using an Ubbelohde viscometer.

### <Method for evaluating curability of the room-temperature-curable silicone elastomer composition>

After allowing the separately stored silicone elastomer base composition and the crosslinking agent composition to sit at rest for 24 hours or more in the curability evaluation temperature atmosphere, the compositions were mixed, applied at a thickness of about 6 mm, and allowed to sit at rest for 24 hours under each evaluation temperature atmosphere. Curability was evaluated by pressing on the resulting material surface with a finger. Cases where fingerprints were not left in the surface (after pressing with a finger) and complete curing was confirmed were evaluated as "cured". Cases where tackiness remained on the surface, fingerprints were left in the surface (after pressing with a finger), and curing was insufficient were evaluated as "surface tacky". Cases where curing was obviously not complete and the material adhered to the finger were evaluated as "uncured".

Evaluation of the curability was conducted under the following three conditions: temperature: 5°C, relative humidity: 30%; temperature: 23°C, relative humidity: 50%; and temperature: 35°C, relative humidity: 50%.

### <Method for evaluating usable life of the room-temperature-curable silicone elastomer composition>

After allowing the separately stored silicone elastomer base composition and the crosslinking agent composition to sit at rest for 24 hours or more in the curability evaluation temperature atmosphere, the compositions were mixed and allowed to sit at rest under each evaluation temperature atmosphere. The admixture was scooped with a metal spatula and the time until the composition lost its viscosity and acquired plastic behavior (known as "snap time") was measured. Admixtures having snap times of 60 minutes or longer were determined to be passing. Evaluation of the usable life was conducted under the following three conditions: temperature: 5°C, relative humidity: 30%; temperature: 23°C, relative humidity: 50%; and temperature: 35°C, relative humidity: 50%.

### <Method for evaluating adhesion of the room-temperature-curable silicone elastomer composition>

An adhesion durability test piece (also referred to as a "type H test piece") was fabricated in accordance with the stipulations of JIS A 1439 by injecting the mixture of the room-temperature-curable silicone elastomer composition between aluminum test panels (alumite A6063S). This test subject was cured by allowing it to sit at rest for 7 days at a temperature of 23°C and a relative humidity of 50%, and thereafter for 7 days at a temperature of 50°C. The resulting test subject was stretched until breaking at a pulling speed of 50 mm/min using a high-precision universal testing machine. The breakage condition was visually observed and evaluated. Cases where the breaking condition of the silicone elastomer was found to be cohesive failure of the silicone elastomer at the plane of breaking were recorded as "CF" and cases where interfacial peeling was found were recorded as "AF".

### Practical Example 1

A silicone elastomer base composition was prepared by uniformly mixing 100 parts of a dimethylpolysiloxane capped at both molecular terminals with hydroxyl groups (viscosity: 80,000 mPa•s), 57 parts of a dimethylpolysiloxane capped at both molecular terminals with trimethylsilyl groups (kinetic viscosity: 100 mm²/s) and 129 parts of a fatty acid treated precipitated calcium carbonate (Hakuenka CCR, manufactured by Shiraishi Kogyo Kaisha, Ltd.). A crosslinking agent composition was prepared by uniformly mixing 3.14 parts of a phenyltrimethoxysilane, 1.71 parts of the carbasilatrane A, and 0.017 parts of dimethyl tin dineodecanoate. Here, a weight ratio of the phenyltrimethoxysilane to the carbasilatrane A was 65:35. Next, the silicone elastomer base composition and the crosslinking agent composition were uniformly mixed at a weight ratio of 100:1.7. Using the resulting mixture, snap time, adhesion, and curability after 24 hours were evaluated. The results of each evaluation are shown in Table 1.

### Practical Example 2

A silicone elastomer base composition was prepared in the same manner as in Practical Example 1. A crosslinking agent composition was prepared by uniformly mixing 4.57 parts of a phenyltrimethoxysilane, 0.29 parts of the carbasilatrane A, and 0.017 parts of dimethyl tin dineodecanoate. Here, a weight ratio of the phenyltrimethoxysilane to the carbasilatrane A was 94:6. Next, the silicone elastomer base composition and the crosslinking agent composition were uniformly mixed at a weight ratio of 100:1.7. Using the resulting mixture, snap time, adhesion, and curability after 24 hours were evaluated. The results of each evaluation are shown in Table 1.

### Practical Example 3

A silicone elastomer base composition was prepared in the same manner as in Practical Example 1. Acrosslinking agent composition was prepared by uniformly mixing 4.14 parts of a phenyltrimethoxysilane, 0.71 parts of the carbasilatrane A, and 0.017 parts of dimethyl tin dineodecanoate. Here, a weight ratio of the phenyltrimethoxysilane to the carbasilatrane A was 85:15. Next, the silicone elastomer base composition and the crosslinking agent composition were uniformly mixed at a weight ratio of 100:1.7. Using the resulting mixture, snap time, adhesion, and curability after 24 hours were evaluated. The results of each evaluation are shown in Table 1.

### Practical Example 4

A silicone elastomer base composition was prepared in the same manner as in Practical Example 1. A crosslinking agent composition was prepared by uniformly mixing 2.57 parts of a phenyltrimethoxysilane, 2.29 parts of the carbasilatrane A, and 0.017 parts of dimethyl tin dineodecanoate. Here, a weight ratio of the phenyltrimethoxysilane to the carbasilatrane A was 53:47. Next, the silicone elastomer base composition and the crosslinking agent composition were uniformly mixed at a weight ratio of 100:1.7. Using the resulting mixture, snap time, adhesion, and curability after 24 hours were evaluated. The results of each evaluation are shown in Table 1.

### Practical Example 5

A silicone elastomer base composition was prepared in the same manner as in Practical Example 1. A crosslinking agent composition was prepared by uniformly mixing 1.71 parts of a phenyltrimethoxysilane, 3.14 parts of the carbasilatrane A, and 0.017 parts of dimethyl tin dineodecanoate. Here, a weight ratio of the phenyltrimethoxysilane to the carbasilatrane A was 35:65. Next, the silicone elastomer base composition and the crosslinking agent composition were uniformly mixed at a weight ratio of 100:1.7. Using the resulting mixture, snap time, adhesion, and curability after 24 hours were evaluated. The results of each evaluation are shown in Table 1.

### Practical Example 6

A silicone elastomer base composition was prepared in the same manner as in Practical Example 1. A crosslinking agent composition was prepared by uniformly mixing 3.14 parts of a phenyltrimethoxysilane, 1.71 parts of a 1,3,5-tris(trimethoxysilylpropyl)isocyanurate, and 0.017 parts of dimethyl tin dineodecanoate. Here, a weight ratio of the phenyltrimethoxysilane to the 1,3,5-tris(trimethoxysilylpropyl)isocyanurate was 65:35. Next, the silicone elastomer base composition and the crosslinking agent composition were uniformly mixed at a weight ratio of 100:1.7. Using the resulting mixture, snap time, adhesion, and curability after 24 hours were evaluated. The results of each evaluation are shown in Table 1.

### Practical Example 7

A silicone elastomer base composition was prepared in the same manner as in Practical Example 1. Acrosslinking agent composition was prepared by uniformly mixing 3.14 parts of a phenyltrimethoxysilane, 1.71 parts of a 1,6-bis(trimethoxysilyl)hexane, and 0.017 parts of dimethyl tin dineodecanoate. Here, a weight ratio of the phenyltrimethoxysilane to the 1,6-bis(trimethoxysilyl)hexane was 65:35. Next, the silicone elastomer base composition and the crosslinking agent composition were uniformly mixed at a weight ratio of 100:1.7. Using the resulting mixture, snap time, adhesion, and curability after 24 hours were evaluated. The results of each evaluation are shown in Table 1.

### Practical Example 8

A silicone elastomer base composition was prepared by uniformly mixing 100 parts of a dimethylpolysiloxane capped at both molecular terminals with hydroxyl groups (viscosity: 13,500 mPa•s) and 82 parts of a fatty acid treated precipitated calcium carbonate. A crosslinking agent composition was prepared by uniformly mixing 3.45 parts of a phenyltrimethoxysilane, 1.82 parts of the carbasilatrane A, and 0.017 parts of dimethyl tin dineodecanoate. Here, a weight ratio of the phenyltrimethoxysilane to the carbasilatrane A was 65:35. Next, the silicone elastomer base composition and the crosslinking agent composition were uniformly mixed at a weight ratio of 100:2.9. Using the resulting mixture, snap time, adhesion, and curability after 24 hours were evaluated. The results of each evaluation are shown in Table 1.

### Practical Example 9

A silicone elastomer base composition was prepared by uniformly mixing 100 parts of a dimethylpolysiloxane capped at both molecular terminals with hydroxyl groups (viscosity: 4,000 mPa•s) and 82 parts of a fatty acid treated precipitated calcium carbonate. A crosslinking agent composition was prepared by uniformly mixing 5.09 parts of a phenyltrimethoxysilane, 2.73 parts of the carbasilatrane A, and 0.017 parts of dimethyl tin dineodecanoate. Here, a weight ratio of the phenyltrimethoxysilane to the carbasilatrane A was 65:35. Next, the silicone elastomer base composition and the crosslinking agent composition were uniformly mixed at a weight ratio of 100:4.3. Using the resulting mixture, snap time, adhesion, and curability after 24 hours were evaluated. The results of each evaluation are shown in Table 1.

### Comparative Example 1

A silicone elastomer base composition was prepared in the same manner as in Practical Example 1. A crosslinking agent composition was prepared by uniformly mixing 4.86 parts of a phenyltrimethoxysilane and 0.017 parts of dimethyl tin dineodecanoate. Next, the silicone elastomer base composition and the crosslinking agent composition were uniformly mixed at a weight ratio of 100:1.7. Using the resulting mixture, snap time, adhesion, and curability after 24 hours were evaluated. The results of each evaluation are shown in Table 2.

### Comparative Example 2

A silicone elastomer base composition was prepared in the same manner as in Practical Example 1. A crosslinking agent composition was prepared by uniformly mixing 4.86 parts of a phenyltrimethoxysilane and 0.0266 parts of dimethyl tin dineodecanoate. Next, the silicone elastomer base composition and the crosslinking agent composition were uniformly mixed at a weight ratio of 100:1.7. Using the resulting mixture, snap time, adhesion, and curability after 24 hours were evaluated. The results of each evaluation are shown in Table 2.

### Comparative Example 3

A silicone elastomer base composition was prepared in the same manner as in Practical Example 1. A crosslinking agent composition was prepared by uniformly mixing 1.14 parts of a phenyltrimethoxysilane, 3.71 parts of the carbasilatrane A, and 0.017 parts of dimethyl tin dineodecanoate. Here, a weight ratio of the phenyltrimethoxysilane to the carbasilatrane A was 24:76. Next, the silicone elastomer base composition and the crosslinking agent composition were uniformly mixed at a weight ratio of 100:1.7. Using the resulting mixture, snap time, adhesion, and curability after 24 hours were evaluated. The results of each evaluation are shown in Table 2.

### Comparative Example 4

A silicone elastomer base composition was prepared in the same manner as in Practical Example 1. A crosslinking agent composition was prepared by uniformly mixing 0.43 parts of a phenyltrimethoxysilane, 4.43 parts of the carbasilatrane A, and 0.017 parts of dimethyl tin dineodecanoate. Here, a weight ratio of the phenyltrimethoxysilane to the carbasilatrane A was 9:91. Next, the silicone elastomer base composition and the crosslinking agent composition were uniformly mixed at a weight ratio of 100:1.7. Using the resulting mixture, snap time, adhesion, and curability after 24 hours were evaluated. The results of each evaluation are shown in Table 2.

### Comparative Example 5

A silicone elastomer base composition was prepared in the same manner as in Practical Example 1. A crosslinking agent composition was prepared by uniformly mixing 4.86 parts of the carbasilatrane A and 0.017 parts of dimethyl tin dineodecanoate. Next, the silicone elastomer base composition and the crosslinking agent composition were uniformly mixed at a weight ratio of 100:1.7. Using the resulting mixture, snap time, adhesion, and curability after 24 hours were evaluated. The results of each evaluation are shown in Table 2.

### Comparative Example 6

A silicone elastomer base composition was prepared in the same manner as in Practical Example 1. A crosslinking agent composition was prepared by uniformly mixing 4.86 parts of the carbasilatrane A and 0.086 parts of dimethyl tin dineodecanoate. Next, the silicone elastomer base composition and the crosslinking agent composition were uniformly mixed at a weight ratio of 100:1.7. Using the resulting mixture, snap time, adhesion, and curability after 24 hours were evaluated. The results of each evaluation are shown in Table 2.

### Comparative Example 7

A silicone elastomer base composition was prepared in the same manner as in Practical Example 1. A crosslinking agent composition was prepared by uniformly mixing 3.14 parts of a decyltrimethoxysilane, 1.71 parts of the carbasilatrane A, and 0.017 parts of dimethyl tin dineodecanoate. Here, a weight ratio of the decyltrimethoxysilane to the carbasilatrane A was 65:35. Next, the silicone elastomer base composition and the crosslinking agent composition were uniformly mixed at a weight ratio of 100:1.7. Using the resulting mixture, snap time, adhesion, and curability after 24 hours were evaluated. The results of each evaluation are shown in Table 2.

### Comparative Example 8

A silicone elastomer base composition was prepared in the same manner as in Practical Example 1. A crosslinking agent composition was prepared by uniformly mixing 3.14 parts of a decyltrimethoxysilane, 1.71 parts of the carbasilatrane A, and 0.057 parts of dimethyl tin dineodecanoate. Here, a weight ratio of the decyltrimethoxysilane to the carbasilatrane A was 65:35. Next, the silicone elastomer base composition and the crosslinking agent composition were uniformly mixed at a weight ratio of 100:1.7. Using the resulting mixture, snap time, adhesion, and curability after 24 hours were evaluated. The results of each evaluation are shown in Table 2.

### Comparative Example 9

A silicone elastomer base composition was prepared in the same manner as in Practical Example 1. A crosslinking agent composition was prepared by uniformly mixing 3.14 parts of a isobutyltrimethoxysilane, 1.71 parts of the carbasilatrane A, and 0.017 parts of dimethyl tin dineodecanoate. Here, a weight ratio of the isobutyltrimethoxysilane to the carbasilatrane A was 65:35. Next, the silicone elastomer base composition and the crosslinking agent composition were uniformly mixed at a weight ratio of 100:1.7. Using the resulting mixture, snap time, adhesion, and curability after 24 hours were evaluated. The results of each evaluation are shown in Table 2.

### Comparative Example 10

A silicone elastomer base composition was prepared in the same manner as in Practical Example 1. A crosslinking agent composition was prepared by uniformly mixing 3.14 parts of a isobutyltrimethoxysilane, 1.71 parts of the carbasilatrane A, and 0.074 parts of dimethyl tin dineodecanoate. Here, a weight ratio of the isobutyltrimethoxysilane to the carbasilatrane A was 65:35. Next, the silicone elastomer base composition and the crosslinking agent composition were uniformly mixed at a weight ratio of 100:1.7. Using the resulting mixture, snap time, adhesion, and curability after 24 hours were evaluated. The results of each evaluation are shown in Table 2.

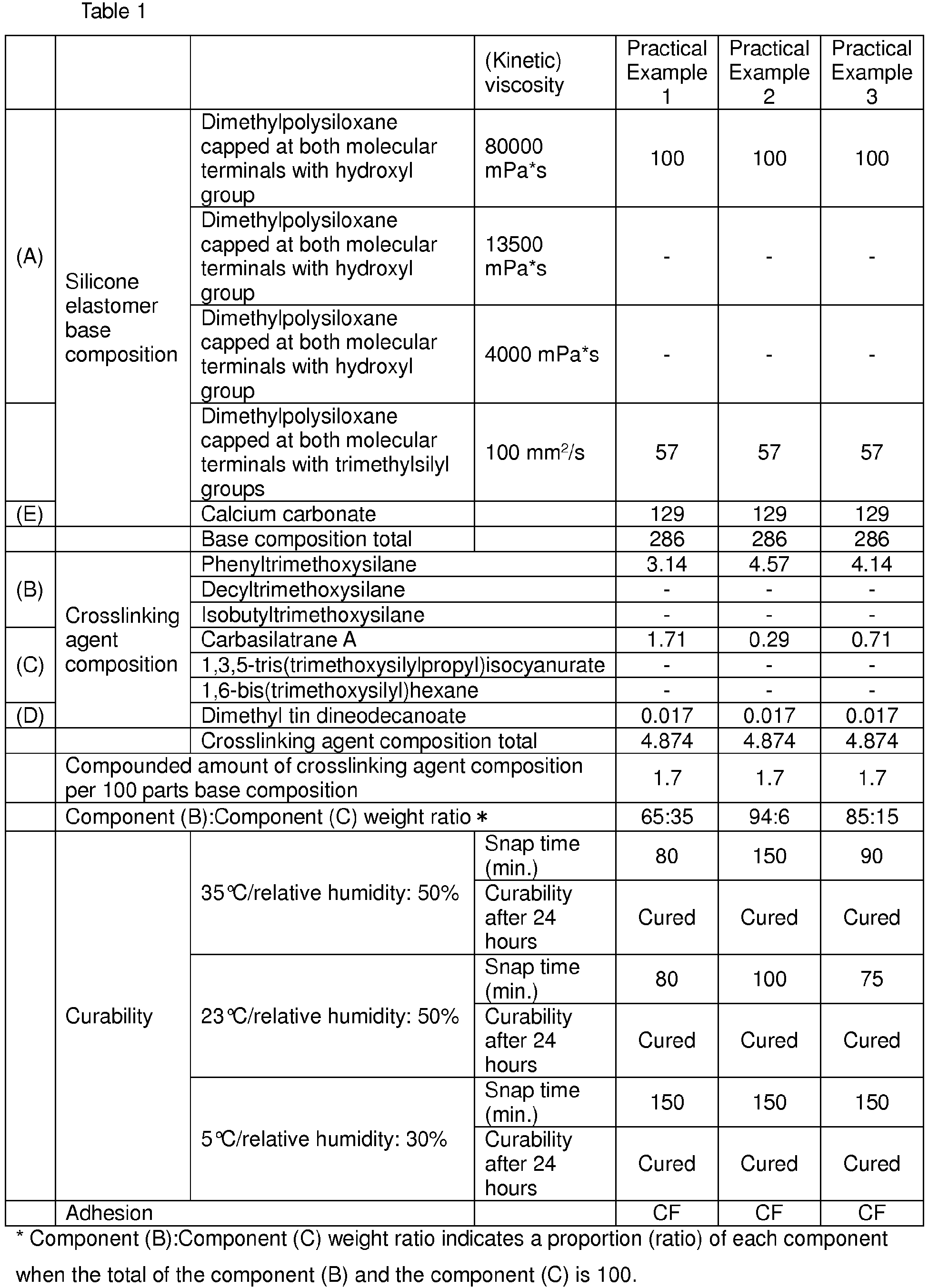

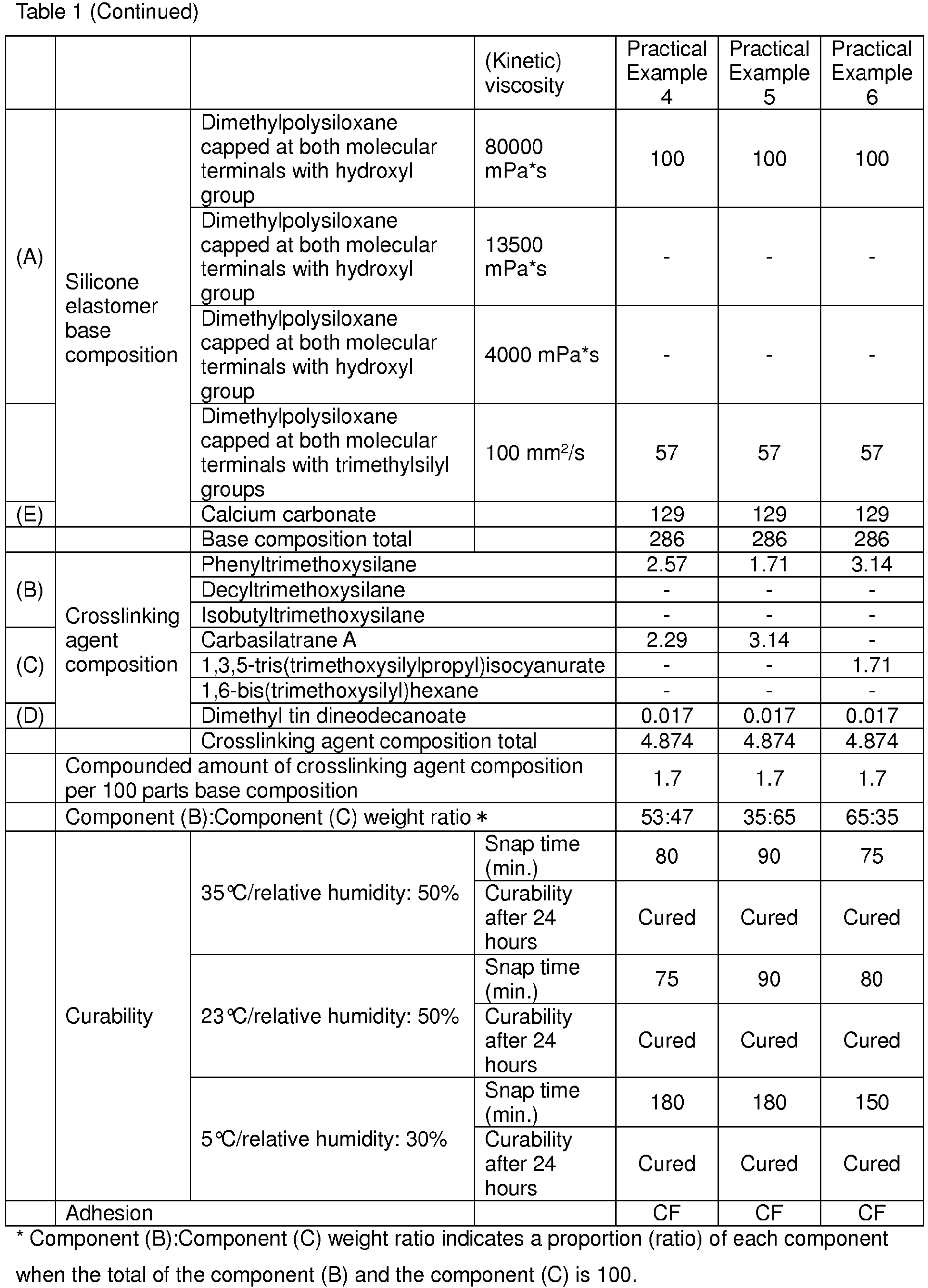

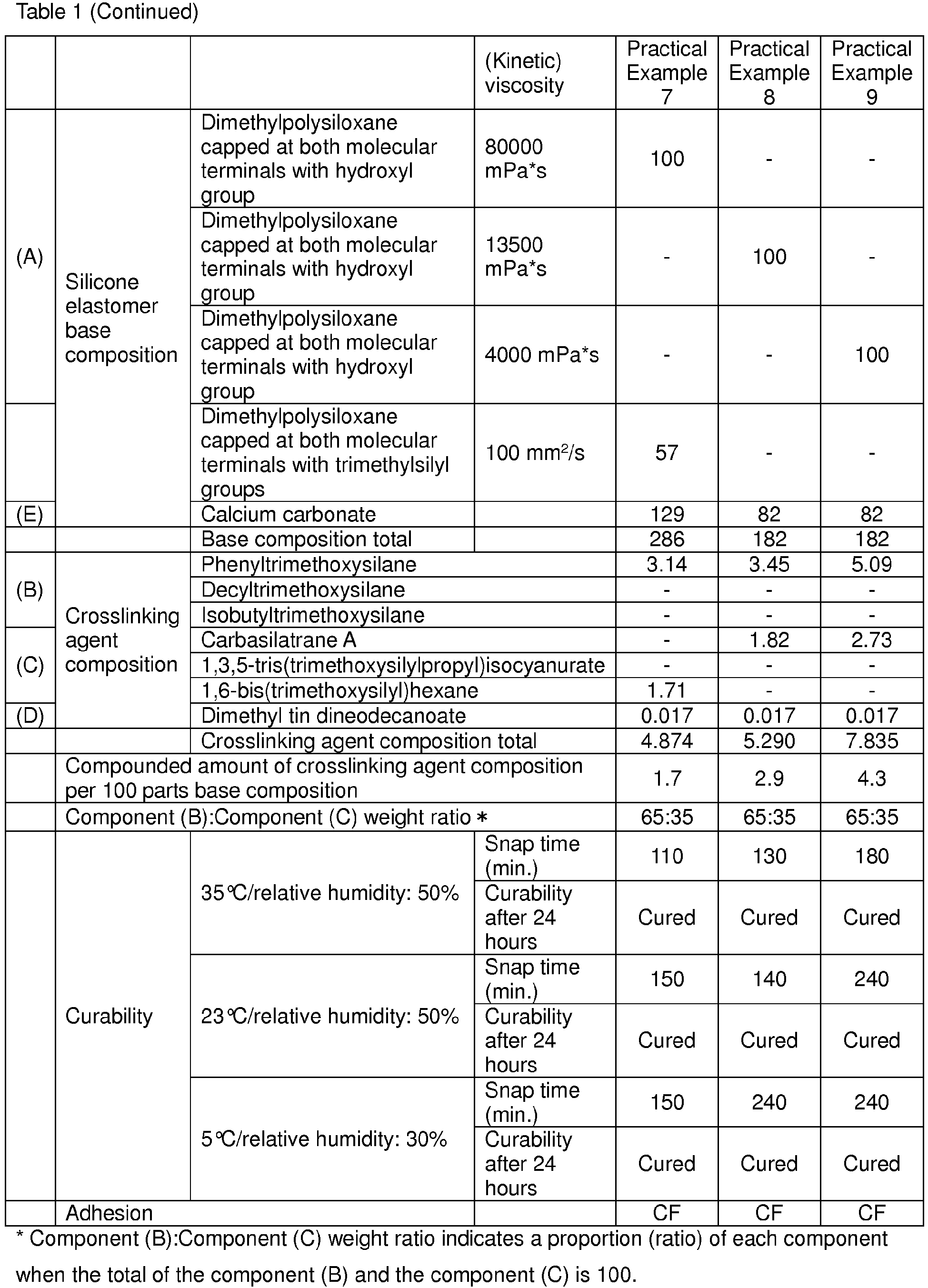

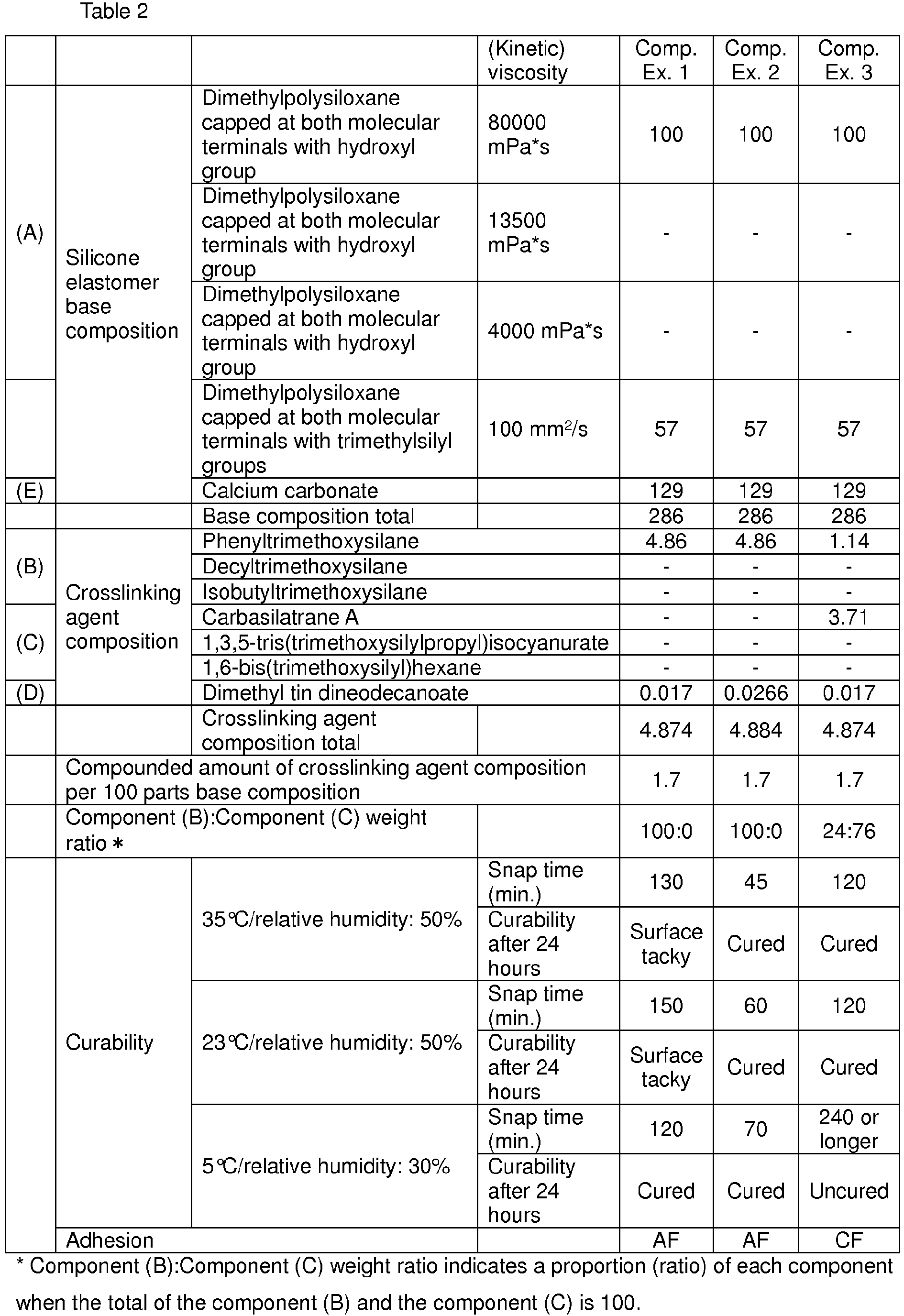

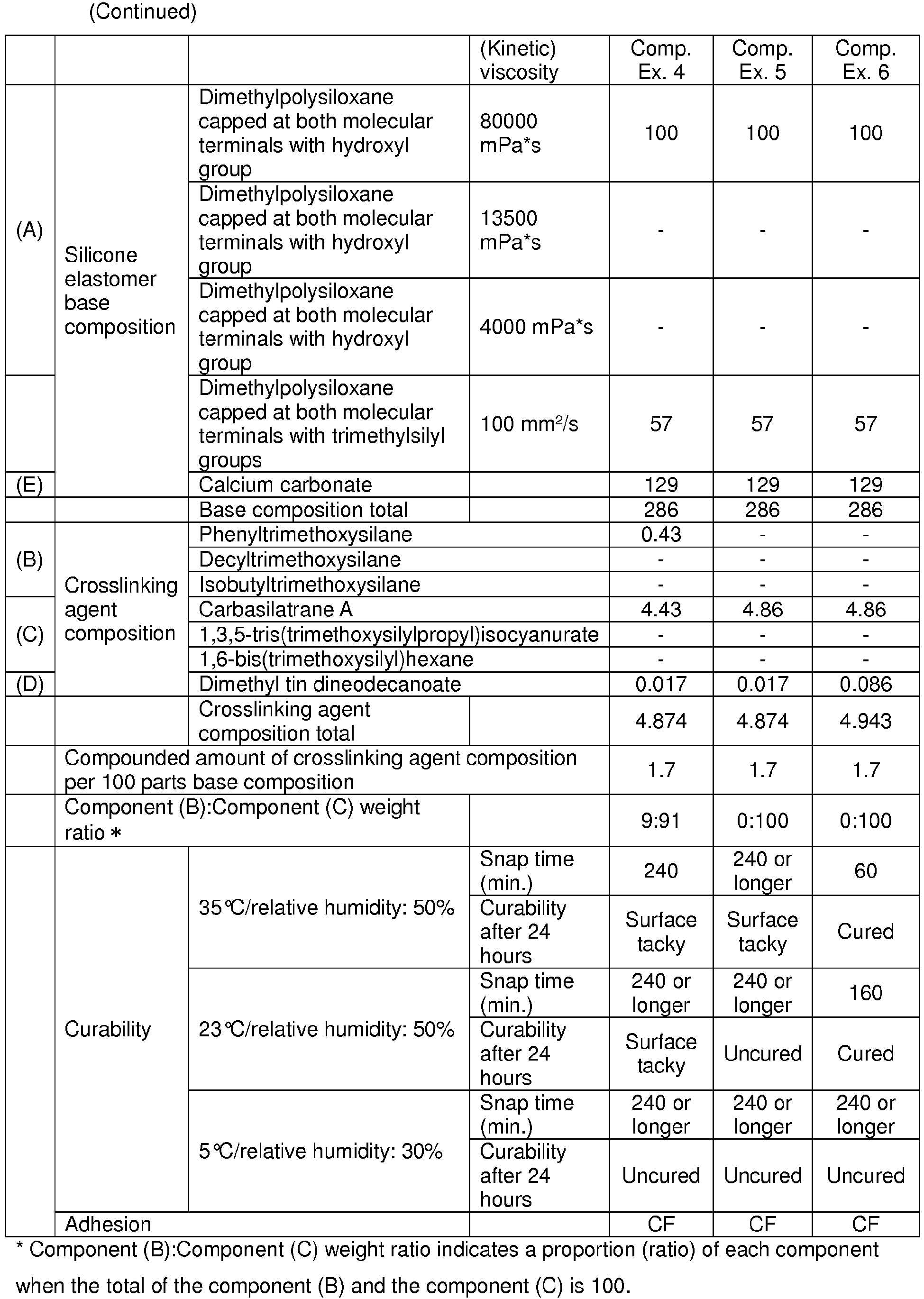

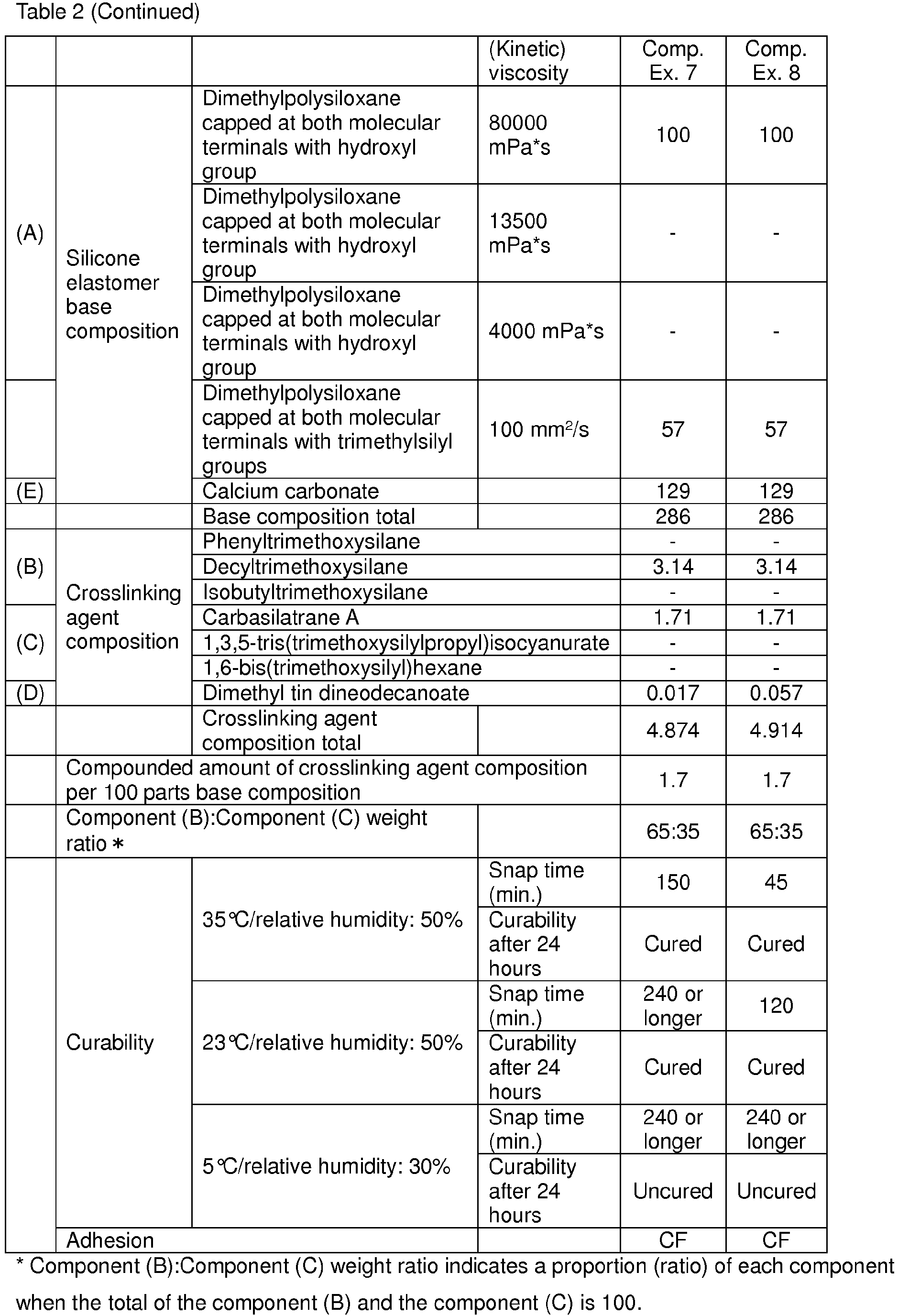

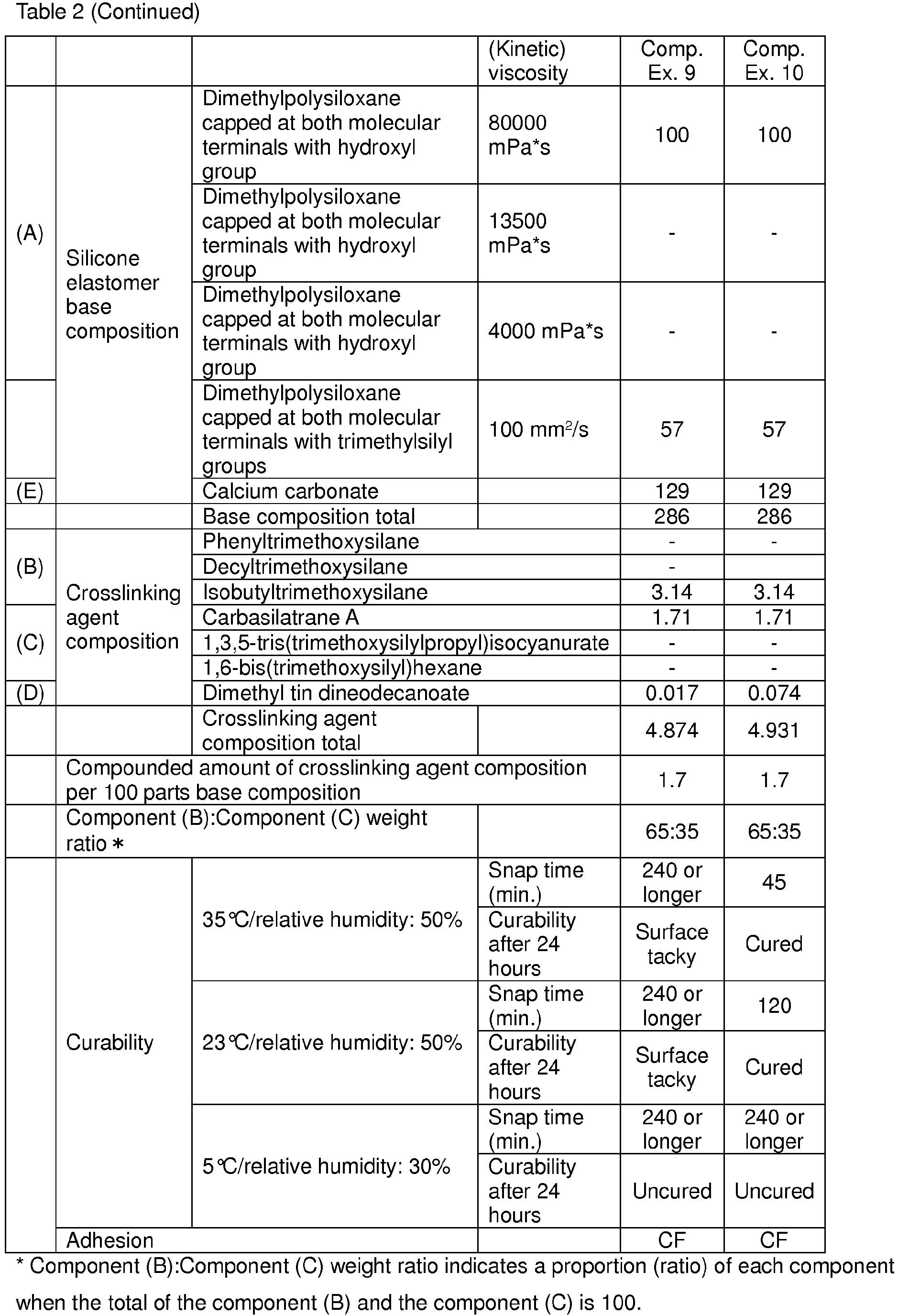

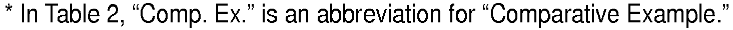

As is clear from Tables 1 and 2, in the cases where the silicone elastomer compositions of Practical Examples 1 to 9 were used, at any of the temperatures 35°C, 23°C, or 5°C, snap time that was 60 minutes or longer could be ensured, curability after 24 hours was excellent, and furthermore, adhesion was excellent.

On the other hand, in the cases where the silicone elastomer compositions of Comparative Examples 1 and 2 were used, in which the organic compound having at least two alkoxysilyl groups in one molecule, and being free of siloxane bonds (C) was not included, adhesion was inferior and, moreover, said adhesion did not improve, even when increasing the content of the curing catalyst.

Additionally, in the cases where the silicone elastomer compositions of Comparative Examples 5 and 6 were used, in which the silicon-bonded aryl group-containing alkoxysilane (B) was not included, and in the cases where the silicone elastomer compositions of Comparative Examples 3 and 4 were used, in which the weight ratios of the component (B) to the component (C) were 24:76 and 9:91, respectively, curability at low temperatures particularly was inferior.

Furthermore, in cases where the silicone elastomer compositions of Comparative Examples 7 to 10 were used, in which an alkoxysilane not having the silicon-bonded aryl groups (B) was not included, curability at low temperatures was inferior, and said curability did not improve, even when increasing the content of the curing catalyst.

## Claims

1. A multi-component room-temperature-curable silicone elastomer composition comprising:
(A) 100 parts by weight of a diorganopolysiloxane capped at the molecular terminals by alkoxysilyl groups or hydroxysilyl groups, having a viscosity at 25°C of 20 to 1,000,000 mPa•s measured using a V-type rotational viscometer;
(B) from 0.1 to 20 parts by weight of a silicon-bonded aryl group-containing alkoxysilane;
(C) from 0.1 to 10 parts by weight of an organic compound having at least two alkoxysilyl groups in one molecule, and being free of siloxane bonds (however, a weight ratio of the component (B) to the component (C) is from 95:5 to 30:70);
(D) from 0.001 to 0.2 parts by weight of a curing catalyst;
and less than 0.02 part by weight of (F) an aminoalkylmethoxysilane per 100 parts by weight of the component (A), or free of aminoalkylmethoxysilane (F);
wherein the multi-component room-temperature-curable silicone elastomer composition is a two-component room-temperature-curable silicone elastomer composition comprising:
(I) a composition including the component (A), but not the component (B), not the component (C), and not the component (D); and
(II) a composition including the component (B), the component (C), and the component (D), but not the component (A).

2. The multi-component room-temperature-curable silicone elastomer composition according to claim 1, wherein the component (B) is a phenyltrialkoxysilane.

3. The multi-component room-temperature-curable silicone elastomer composition according to claim 1 or 2, wherein the alkoxy groups of the component (B) are methoxy groups.

4. The multi-component room-temperature-curable silicone elastomer composition according to any one of claims 1 to 3, wherein the component (C) is selected from the group consisting of (C-1) a reaction product of an epoxy group-containing alkoxysilane and an amino group-containing alkoxysilane, (C-2) an alkoxysilyl group-containing isocyanurate, and (C-3) a bis(alkoxysilyl)alkane.

5. The multi-component room-temperature-curable silicone elastomer composition according to any one of claims 1 to 4, wherein the alkoxy groups of the component (C) are methoxy groups.

6. The multi-component room-temperature-curable silicone elastomer composition according to any one of claims 1 to 5, further comprising from 10 to 200 parts by weight of a powder of calcium carbonate having a BET specific surface area from 5 to 50 m²/g (component (E)) per 100 parts by weight of the component (A).

7. A composition of claim 6 that is a two-component room-temperature-curable silicone elastomer composition comprising: (I) a composition including the component (A) and the component (E), but not the component (B), the component (C), and the component (D); and (II) a composition including the component (B), the component (C), and the component (D), but not the component (A) and the component (E).

8. A composition of claim 6 that is a two-component room-temperature-curable silicone elastomer composition comprising: (I) a composition including the component (A) and the component (E), but not the component (B), the component (C), the component (D), and the component (F); and (II) a composition including the component (B), the component (C), the component (D), and the component (F), but not the component (A) and the component (E).

9. A crosslinking agent composition for a two-component room-temperature-curable silicone elastomer composition, the crosslinking agent composition comprising: 100 parts by weight of the silicon-bonded aryl group-containing alkoxysilane (B);
the organic compound having at least two alkoxysilyl groups in one molecule, and being free of siloxane bonds (C) (at an amount where a weight ratio of the component (B) to the component (C) is from 95:5 to 30:70); and
from 0.005 to 20 parts by weight of the curing catalyst (D).

10. Use of a crosslinking agent composition in accordance with claim 9 in a two-component room-temperature-curable silicone elastomer composition in accordance with any one of claims 1 to 8.

## Patentansprüche

1. Bei Raumtemperatur härtbare Mehrkomponenten-Silikonelastomerzusammensetzung, die Folgendes umfasst:
(A) 100 Gewichtsteile eines Diorganopolysiloxans, das an den Molekülenden durch Alkoxysilylgruppen oder Hydroxysilylgruppen mit einer Viskosität bei 25 °C von 20 bis 1.000.000 mPa s, gemessen unter Verwendung eines Rotationsviskosimeters vom V-Typ, bedeckt ist;
(B) 0,1 bis 20 Gewichtsteile eines siliciumgebundenen Arylgruppen enthaltenden Alkoxysilans;
(C) 0,1 bis 10 Gewichtsteile einer organischen Verbindung mit mindestens zwei Alkoxysilylgruppen in einem Molekül und frei von Siloxanbindungen (das Gewichtsverhältnis der Komponente (B) zu der Komponente (C) beträgt jedoch 95:5 bis 30:70);
(D) 0,001 bis 0,2 Gewichtsteile eines Härtungskatalysators;
und weniger als 0,02 Gewichtsteile (F) eines Aminoalkylmethoxysilans pro 100 Gewichtsteile der Komponente (A), oder frei von Aminoalkylmethoxysilan (F);
wobei die bei Raumtemperatur härtbare Mehrkomponenten-Silikonelastomerzusammensetzung eine bei Raumtemperatur härtbare Zweikomponenten-Silikonelastomerzusammensetzung ist, die Folgendes umfasst:
(I) eine Zusammensetzung, die die Komponente (A), jedoch nicht die Komponente (B), nicht die Komponente (C) und nicht die Komponente (D) beinhaltet; und
(II) eine Zusammensetzung, die die Komponente (B), die Komponente (C) und die Komponente (D), jedoch nicht die Komponente (A) beinhaltet.

2. Bei Raumtemperatur härtbare Mehrkomponenten-Silikonelastomerzusammensetzung nach Anspruch 1, wobei die Komponente (B) ein Phenyltrialkoxysilan ist.

3. Bei Raumtemperatur härtbare Mehrkomponenten-Silikonelastomerzusammensetzung nach Anspruch 1 oder 2, wobei die Alkoxygruppen der Komponente (B) Methoxygruppen sind.

4. Bei Raumtemperatur härtbare Mehrkomponenten-Silikonelastomerzusammensetzung nach einem der Ansprüche 1 bis 3, wobei die Komponente (C) ausgewählt ist aus der Gruppe bestehend aus (C-1) einem Reaktionsprodukt eines Epoxygruppen enthaltenden Alkoxysilans und eines Aminogruppen enthaltendes Alkoxysilans, (C-2) einem Alkoxysilylgruppen enthaltenden Isocyanurat und (C-3) einem Bis(alkoxysilyl)alkan.

5. Bei Raumtemperatur härtbare Mehrkomponenten-Silikonelastomerzusammensetzung nach einem der Ansprüche 1 bis 4, wobei die Alkoxygruppen der Komponente (C) Methoxygruppen sind.

6. Bei Raumtemperatur härtbare Mehrkomponenten-Silikonelastomerzusammensetzung nach einem der Ansprüche 1 bis 5, ferner umfassend 10 bis 200 Gewichtsteile eines Pulvers aus Calciumcarbonat mit einem BET-spezifischen Oberflächenbereich von 5 bis 50 m²/g (Komponente (E)) pro 100 Gewichtsteile der Komponente (A).

7. Zusammensetzung nach Anspruch 6, die eine bei Raumtemperatur härtbare Zweikomponenten-Silikonelastomerzusammensetzung ist, die Folgendes umfasst: (I) eine Zusammensetzung, die die Komponente (A) und die Komponente (E), jedoch nicht die Komponente (B), die Komponente (C) und die Komponente (D) beinhaltet; und (II) eine Zusammensetzung, die die Komponente (B), die Komponente (C) und die Komponente (D), jedoch nicht die Komponente (A) und die Komponente (E) beinhaltet.

8. Zusammensetzung nach Anspruch 6, die eine bei Raumtemperatur härtbare Zweikomponenten-Silikonelastomerzusammensetzung ist, umfassend: (I) eine Zusammensetzung, die die Komponente (A) und die Komponente (E), jedoch nicht die Komponente (B), die Komponente (C) die Komponente (D) und die Komponente (F) beinhaltet; und (II) eine Zusammensetzung, die die Komponente (B), die Komponente (C), die Komponente (D) und die Komponente (F), jedoch nicht die Komponente (A) und die Komponente (E) beinhaltet.

9. Vernetzungsmittelzusammensetzung für eine bei Raumtemperatur härtbare Zweikomponenten-Silikonelastomerzusammensetzung, wobei die Vernetzungsmittelzusammensetzung Folgendes umfasst: 100 Gewichtsteile des siliciumgebundenen Arylgruppen enthaltenden Alkoxysilans (B);
wobei die organische Verbindung mindestens zwei Alkoxysilylgruppen in einem Molekül aufweist und frei von Siloxanbindungen (C) ist (in einer Menge, bei der das Gewichtsverhältnis der Komponente (B) zu der Komponente (C) 95:5 bis 30:70 beträgt); und 0,005 bis 20 Gewichtsteile des Härtungskatalysators (D).

10. Verwendung einer Vernetzungsmittelzusammensetzung nach Anspruch 9 in einer bei Raumtemperatur härtbaren Zweikomponenten-Silikonelastomerzusammensetzung nach einem der Ansprüche 1 bis 8.

## Revendications

1. Composition élastomère de silicone durcissable à température ambiante à composants multiples comprenant :
(A) 100 parties en poids d'un diorganopolysiloxane coiffé aux extrémités moléculaires par des groupes alcoxysilyle ou des groupes hydroxysilyle, ayant une viscosité à 25°C de 20 à 1 000 000 mPa.s mesurée en utilisant un viscosimètre rotatif de type V;
(B) de 0,1 à 20 parties en poids d'un alcoxysilane contenant un groupe aryle lié au silicium ;
(C) de 0,1 à 10 parties en poids d'un composé organique ayant au moins deux groupes alcoxysilyle dans une molécule, et étant exempt de liaisons siloxane (toutefois, un rapport pondéral entre le composant (B) et le composant (C) est compris entre 95:5 et 30:70) ;
(D) de 0,001 à 0,2 partie en poids d'un catalyseur de durcissement ;
et moins de 0,02 partie en poids de (F) un aminoalkylméthoxysilane pour 100 parties en poids du composant (A), ou sans aminoalkylméthoxysilane (F) ;
la composition élastomère de silicone durcissable à température ambiante à composants multiples étant une composition élastomère de silicone durcissable à température ambiante à deux composants comprenant :
(I) une composition comprenant le composant (A), mais ni le composant (B), ni le composant (C), ni le composant (D) ; et
(II) une composition comprenant le composant (B), le composant (C) et le composant (D), mais pas le composant (A).

2. Composition élastomère de silicone durcissable à température ambiante à composants multiples selon la revendication 1, dans laquelle le composant (B) est un phényltrialcoxysilane.

3. Composition élastomère de silicone durcissable à température ambiante à composants multiples selon la revendication 1 ou 2, dans laquelle les groupes alcoxy du composant (B) sont des groupes méthoxy.

4. Composition élastomère de silicone durcissable à température ambiante à composants multiples selon l'une quelconque des revendications 1 à 3, dans laquelle le composant (C) est choisi dans le groupe constitué de (C-1) un produit de réaction d'un alcoxysilane contenant un groupe époxy et un alcoxysilane contenant un groupe amino, (C-2) un isocyanurate contenant un groupe alcoxysilyle et (C-3) un bis(alcoxysilyl)alcane.

5. Composition élastomère de silicone durcissable à température ambiante à composants multiples selon l'une quelconque des revendications 1 à 4, dans laquelle les groupes alcoxy du composant (C) sont des groupes méthoxy.

6. Composition élastomère de silicone durcissable à température ambiante à composants multiples selon l'une quelconque des revendications 1 à 5, comprenant en outre de 10 à 200 parties en poids d'une poudre de carbonate de calcium ayant une surface spécifique BET de 5 à 50 m²/g (composant (E)) pour 100 parties en poids du composant (A).

7. Composition selon la revendication 6 qui est une composition élastomère de silicone durcissable à température ambiante à deux composants comprenant : (I) une composition comprenant le composant (A) et le composant (E), mais ni le composant (B), ni le composant (C), ni le composant (D) ; et (II) une composition comprenant le composant (B), le composant (C) et le composant (D) mais ni le composant (A), ni le composant (E).

8. Composition selon la revendication 6 qui est une composition élastomère de silicone durcissable à température ambiante à deux composants comprenant : (I) une composition comprenant le composant (A) et le composant (E), mais ni le composant (B), ni le composant (C), ni le composant (D), ni le composant (F) ; et (II) une composition comprenant le composant (B), le composant (C), le composant (D) et le composant (F), mais ni le composant (A), ni le composant (E).

9. Composition d'agent de réticulation pour une composition élastomère de silicone durcissable à température ambiante à deux composants, la composition d'agent de réticulation comprenant : 100 parties en poids de l'alcoxysilane contenant un groupe aryle lié au silicium (B) ;
le composé organique ayant au moins deux groupes alcoxysilyle dans une molécule, et étant exempt de liaisons siloxane (C) (dans une quantité où un rapport pondéral entre le composant (B) et le composant (C) est compris entre 95:5 et 30:70) ; et
de 0,005 à 20 parties en poids du catalyseur de durcissement (D).

10. Utilisation d'une composition d'agent de réticulation selon la revendication 9 dans une composition élastomère de silicone durcissable à température ambiante à deux composants selon l'une quelconque des revendications 1 à 8.
